(19) Europäisches Patentamt / European Patent Office / Office européen des brevets

(11) **EP 2 583 837 B1**

(12) **EUROPEAN PATENT SPECIFICATION**

(45) Date of publication and mention
of the grant of the patent:
**18.05.2016 Bulletin 2016/20**

(51) Int Cl.:
**B60C 9/22** *(2006.01)* **B60C 3/04** *(2006.01)*
**B60C 9/18** *(2006.01)* **B60C 9/20** *(2006.01)*

(21) Application number: **11797744.7**

(22) Date of filing: **22.03.2011**

(86) International application number:
**PCT/JP2011/001663**

(87) International publication number:
**WO 2011/161854 (29.12.2011 Gazette 2011/52)**

(54) **PNEUMATIC RADIAL TIRE FOR AUTOMOBILES**

LUFTREIFEN FÜR AUTOMOBILE

PNEUMATIQUE À CARCASSE RADIALE POUR AUTOMOBILES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.06.2010 JP 2010141015**

(43) Date of publication of application:
**24.04.2013 Bulletin 2013/17**

(73) Proprietor: **Bridgestone Corporation
Tokyo 104-8340 (JP)**

(72) Inventor: **KUWAYAMA, Isao
Kodaira-shi
Tokyo 187-8531 (JP)**

(74) Representative: **Lamb, Martin John Carstairs
Marks & Clerk LLP
90 Long Acre
London WC2E 9RA (GB)**

(56) References cited:
**JP-A- 4 283 108     JP-A- 63 106 102
JP-A- 2007 168 711**

**Description**

**TECHNICAL FIELD**

The present invention relates to a pneumatic radial tire for a passenger vehicle, and more particularly for a tire used for an electronic vehicle simultaneously improving low fuel consumption, interior comfort and an uneven wear resistance.

**RELATED ART**

Until the 1960s, vehicles were lighter, and the speed demanded for the vehicles were lower, resulting a less burden on the tires were less. Therefore, bias tires with narrower section widths had been used. Today, due to heavier weight and higher speed of vehicles, tires having a radial structure and a larger width have been more widely manufactured (see Patent Document 1). A tire applied with a radial carcass has an excellent uneven wear resistance due to higher rigidity of the tire crown portion as compared with a bias tire. In addition, because the high rigidity of the crown portion suppresses a transmission of motions of tire constituting members, the rolling resistance is reduced. For this reason, the radial tire has advantages that the fuel consumption is low, and the cornering power is high. Also, the larger width of the tire can increase the ground contact area of the tire to increase the cornering power.

However, the larger tire width sacrifices the vehicle space, and thus will degrade the interior comfort. In addition, since the air resistance has been increased, there is a problem that the fuel consumption becomes worse. In recent years, with increased interest in environmental issues, lower fuel consumption has been demanding. In particular, electric vehicles, which have being put into practical use in future, need to ensure a space for accommodating a driving component such as a motor for controlling the torque for rotating a tire around the tire axle, so that ensuring a space around the tire is getting more important.

**PRIOR TECHNICAL DOCUMENTATIONS**

Patent Document 1: Japanese Patent Application Laid-Open Publication No. H07-040706 (JP 7040706 A). Attention is also drawn to the disclosures of JPS63 106102 and JP2007 168711.

**SUMMARY OF THE INVENTION**

The present invention aims to solve the above problems, and its object is to provide a pneumatic radial tire for a passenger vehicle capable of realizing a low coefficient of air resistance (Cd) of the vehicle equipped with the tire, a low rolling resistance (RR) of the tire, a low fuel consumption and a sufficient inner space. Further, the invention also aims to improve the uneven wear resistance of the tire of electric vehicles.

The inventor has studied intensively to solve the above problems. As a result, it has been found that regulating the ratio of the section width W and the outer diameter L of the tire within a certain range will be extremely effective in improving the fuel consumption and the interior comfort of a radial tire. Further, the inventor has studied intensively and repeatedly to improve the uneven wear resistance, the maximum cornering force and the cornering power of the radial tire having the above-mentioned ratio regulated within a certain range, and has found that enhancing the ring-rigidity of the radial tire as well as the regulation of the above-mentioned ratio will suppress the deterioration of the uneven wear resistance of the tire.

In addition, the inventor has obtained new finding that a radial tire with higher ring-rigidity and lower out-of-plane bending rigidity in the tire-circumferential-direction can increase the contact length of the tire to improve the maximum cornering force and the cornering power.

The means to solve the above-mentioned problems according to the present invention are summarized as follows :

(1) A pneumatic radial tire for a passenger vehicle comprising a pair of bead portions, a carcass formed by a ply of radially arranged cords extending toroidally between the pair of beads portion, a belt formed by one or more belt plies disposed outside of the carcass in a radial direction, and a tread disposed outside of the belt in a radial direction, wherein a ratio W/L is 0.25 or less wherein W is a section width and L is an outer diameter of the tire, and a belt reinforcing layer having high rigidity is disposed between the belt and the tread.

(2) The pneumatic radial tire for a passenger vehicle according to the item (1), wherein the ratio W/L is 0.24 or less.

(3) The pneumatic radial tire for a passenger vehicle according to the item (1) or (2), wherein the belt reinforcing layer comprises a rubberized cord layer containing cords extending in the circumferential direction of the tire and satisfies the following relationships:

$$X = Y * n * m,$$

$$X \geq 750$$

where Y is a Young's modulus (GPa) of the cords, n is a placement density of the cords (pieces/50mm), and m is the number of the belt reinforcing layer.

(4) The pneumatic radial tire for a passenger vehicle according to any one of the items (1)-(3), wherein an air capacity of the tire is 15,000 cm$^3$ or more.

(5) The pneumatic radial tire for a passenger vehicle according to any one of the items (1)-(4), wherein the belt layer comprises a plurality of inclined-belt layers formed by belt cords inclined at an angle of 50 degrees to 70 degrees with respect to the circumferential direction of the tire, the belt cords intersecting with each other between the inclined-belt layers.

According to the present invention, it is possible to provide a pneumatic radial tire for a passenger vehicle with a reduction of coefficient of (value Cd) of the vehicle and the tire-rolling-resistance value (value RR), excellence on low fuel consumption, the interior comfort, and the uneven wear resistance.

## BRIEF DESCRIPTION OF DRAWINGS

Figure 1 illustrates a cross-sectional width W and an outer diameter L of the tire.

Figure 2 (a) illustrates a vehicle equipped with the tires having an enlarged diameter and a narrowed width according to the present invention.

Figure 2 (b) illustrates a vehicle equipped with conventional tires.

Figure 3 illustrates a schematic cross-sectional view of the radial tire used for the tests of the present invention.

Figure 4 illustrates the relationships between the rolling resistance (RR) of the tire and the coefficient of air resistance (Cd) of the vehicle in various ratios W/L of the section width W to the outer diameter L of the tire.

Figure 5 (a) illustrates a deformation of a footprint shape of the tire having a narrowed width and an enlarged diameter.

Figure 5 (b) illustrates a deformation of the footprint shape of the tire according to one embodiment of the present invention.

Figure 5 (c) illustrates a deformation of the footprint shape of the tires according to another embodiment of the present invention.

Figure 6 is an explanatory drawing showing the definition of change indices of the footprint length and the footprint shape.

Figure 7 (a) illustrates a schematic cross-sectional view of a radial tire according to an embodiment of the present invention.

Figure 7 (b) illustrates a schematic cross-sectional view of a radial tire according to another embodiment of the present invention.

Figure 8 (a) illustrates a schematic cross-sectional view of a radial tire according to another embodiment of the present invention;

Figure 8 (b) illustrates a schematic cross-sectional view of a radial tire according to another embodiment of the present invention;

Figure 9 is an explanatory drawing showing the out-of-plane bending rigidity.

## DESCRIPTION OF EMBODIMENTS

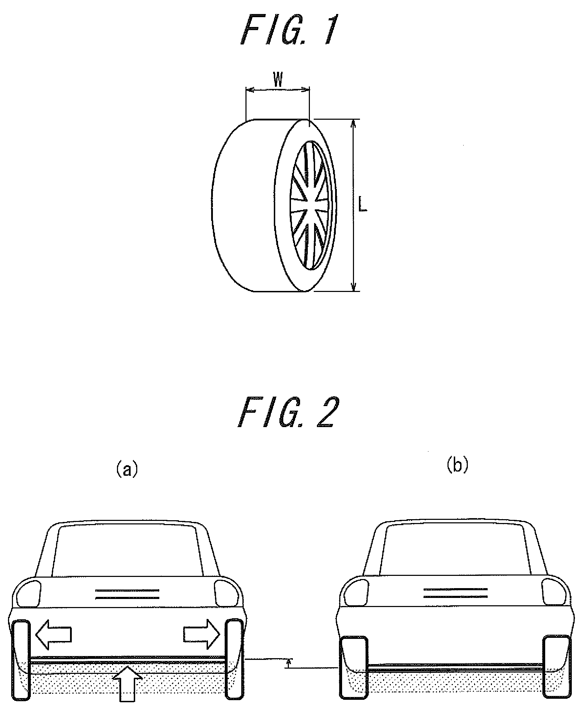

The following describe the processes led to the development of a pneumatic radial tire for a passenger vehicle according to the present invention. First, the inventor focused attention on the section width W of the radial tire as shown in Figure 1, and has found that, by narrowing the cross-section-width W as compared to the conventional tire, as shown in Figure 2, an interior space, especially a space for arranging drive components near the inside of the tire installed on the vehicle can be ensured. In addition, a tire with a narrower section-width W has a smaller area as viewed from the front of the tire (hereinafter referred to as the front projection area), which results in an effect of reducing the air resistance of the vehicle. However, it involves a larger deformation of the ground contact portion, which causes a problem that the tire has larger rolling resistance under the same air pressure.

Further, the inventor has found that the peculiar nature of the radial tire may solve the above-mentioned problems. That is, as compared to the bias tires, the radial tires have smaller deformation of the tread. The inventor focused attention on the outer diameter L of the radial tire as shown in Figure 1, and has found that, by making the outer diameter L larger as compared to the conventional tire, the radial tire is less affected by the roughness of the road surface, and thus the rolling resistance can be reduced under the same air pressure. In addition, the inventor has obtained knowledge that a larger diameter can increase the loading capacity of the tire, and that, as shown in Figure 2, a larger diameter of the radial tire elevates the wheel axel to increase a space under the floor, thereby ensuring a space for the trunk of the vehicle and a space for arranging the drive components.

Both of the narrower width and the larger diameter of the tire, although effective to secure the space of the vehicle as discussed above, have a trade-off relationship with the rolling resistance. The narrower width can also reduce the coefficient of air resistance of the vehicle.

Accordingly, the inventor intensively studied the coefficient of the air resistance and the rolling resistance in order to further improve these characteristics as compared with the conventional radial tire by optimizing a balance between the section width and the outer diameter of the tire.

The inventor focused attention on the ratio W/L of the section width W to the outer diameter L of the tire, carried out tests for tires installed on the vehicle and having various tire sizes including non-standard sizes with measuring the rolling resistance and the coefficient of air resistance, and derived the conditions of the W/L ratio that both of above-mentioned characteristics exceed those of the conventional radial tires.

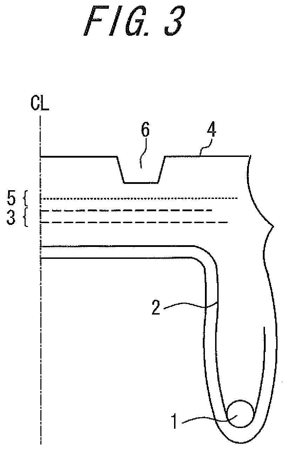

Hereinafter, the test results leading to the suitable range of the W/L ratio will be discussed in detail. Figure 3 is a schematic cross-sectional view in the width direction of the radial tire used for the above-mentioned test. It should be noted that Figure 3 shows only a half portion of the tire bounded by a tire equatorial line CL. As the test tires, a plurality of pneumatic radial tires for a passenger vehicle having, as shown in Figure 3, a pair of beads cores 1 (only one bead is shown in Figure 3), and a radially arranged carcass 2 extending toroidally between the pair of beads cores 1, are prepared in different tire sizes. It should be noted that the tire sizes are not limited to the conventional standards such as JATMA (Japan tire standard), TRA (American tire standard), ETRTO (European tire standard), but wide variety of tire sizes including those not specified in these standards are tested.

In the illustrated tire, the carcass 2 is made of organic fibers, and a belt 3 consisting of a plurality of belt layers (two belt layers in this example) and a tread 4 are disposed radially outwardly of the crown portion of the carcass 2 in this order. The two belt layers of the illustrated example are inclined-belt layers inclined at an angle of 20 degrees to 40 degrees with respect to the tire-equatorial-plane CL. The belt cords of the different inclined-belt layers intersect with each other. In addition, outside the belt layers in the radial direction of the tire is disposed a belt-reinforcing layer 5 consisting of a rubberized cord layer containing cords extending along the tire equatorial plane CL. In the illustrated example, the belt reinforcing layer 5 includes nylon cords with the Young's modulus of 3.2GPa the fiber fineness of 1400 dtex, and the placement density of the cords is 50 (pieces/50mm). It should be noted that the Young's modulus is tested in the tire-circumferential-direction in accordance with JIS L1017 8.5 a) (2002), and determined in accordance with JIS L1017 8.8 (2002). In addition, a plurality of main grooves 6 (in the illustrated example, on in each half portion) extending in one tire-circumferential-direction are disposed on the tread 4.

On the basis of the above-mentioned tire structure, various tires with different section widths and outer diameters are experimentally manufactured. A conventional tire used as the reference of the evaluation of the test is prepared with a tire size of 175/65R15 and has the conventional structure mentioned above. This particular tire size is used in tires for general purpose vehicles, and is most suitable for comparing the performances between the tires. The specifications of each tire are shown in Table 1 below.

Table 1

|  | Tire Size | W/L ratio |
|---|---|---|
| Test Tire 1 | 155/55R21 | 0.22 |
| Test Tire 2 | 165/55R21 | 0.23 |
| Test Tire 3 | 155/55R19 | 0.24 |
| Test Tire 4 | 155/70R17 | 0.24 |
| Test Tire 5 | 165/55R20 | 0.24 |
| Test Tire 6 | 165/65R19 | 0.24 |
| Test Tire 7 | 165/70R18 | 0.24 |

(continued)

|  | Tire Size | W/L ratio |
|---|---|---|
| Test Tire 8 | 165/55R16 | 0.28 |
| Test Tire 9 | 175/65R15 | 0.28 |
| Test Tire 10 | 185/60R17 | 0.28 |
| Test Tire 11 | 195/65R17 | 0.28 |
| Test Tire 12 | 205/60R18 | 0.28 |
| Test Tire 13 | 185/50R16 | 0.31 |
| Test Tire 14 | 205/60R16 | 0.31 |
| Test Tire 15 | 215/60R17 | 0.31 |
| Test Tire 16 | 225/65R17 | 0.31 |
| Test Tire 17 | 175/55R21 | 0.24 |
| Test Tire 18 | 205/50R21 | 0.28 |
| Test Tire 19 | 215/50R22 | 0.28 |
| Test Tire 20 | 215/60R17 | 0.31 |
| Test Tire 21 | 225/55R19 | 0.31 |
| Test Tire 22 | 235/50R21 | 0.31 |
| Test Tire 23 | 165/55R19 | 0.25 |
| Test Tire 24 | 165/70R17 | 0.25 |
| Test Tire 25 | 175/55R20 | 0.25 |
| Test Tire 26 | 175/65R19 | 0.25 |
| Test Tire 27 | 175/80R18 | 0.25 |
| Test Tire 28 | 185/55R21 | 0.25 |
| Test Tire 29 | 155/50R21 | 0.23 |
| Test Tire 30 | 145/50R19 | 0.23 |
| Test Tire 31 | 145/55R19 | 0.23 |
| Test Tire 32 | 145/60R18 | 0.23 |
| Conventional Tire | 195/65R15 | 0.31 |

Each test is carried out as follows.

<Coefficient of air resistance (Cd)>

In the laboratory, each of the above-mentioned tires is installed to a vehicle with 1500 cc engine capacity, air is blown at a speed equivalent to 100 km/h, and the air force is measured with using a balance on the floor under the wheel. The evaluation results are indicated by indices with the evaluation result of the conventional tire being set to 100. The smaller the value is, the smaller coefficient of air resistance the tire has.

<Rolling resistance (RR)>

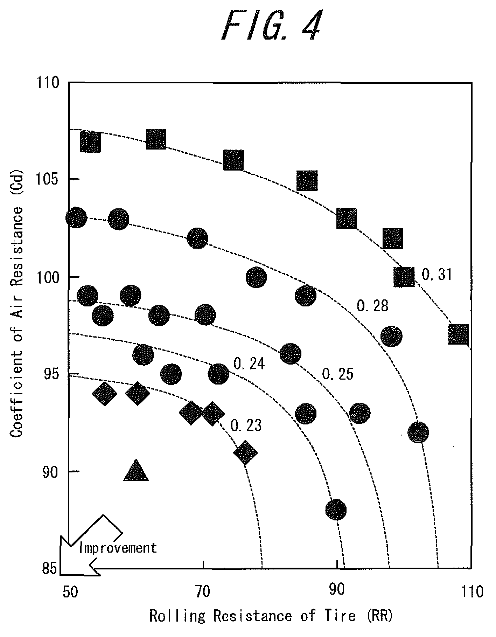

The rolling resistance is measured under the conditions where each of the above-mentioned tires is assembled on a rim, the air pressure of 220kPa and the load of 3.5kN are applied, and the test drum is rotated at the speed equivalent to 100km/h. The evaluation results are indicated by indices with the evaluation result of the conventional tire being set to 100. The smaller the index value is, the smaller rolling resistance the tire has. Table 2 and Figure 4 indicate the results of each test.

Table 2

|  | RR | Cd |
|---|---|---|
| Test Tire 1 | 60 | 90 |
| Test Tire 2 | 55 | 94 |
| Test Tire 3 | 90 | 88 |
| Test Tire 4 | 85 | 93 |
| Test Tire 5 | 72 | 95 |
| Test Tire 6 | 65 | 95 |
| Test Tire 7 | 61 | 96 |
| Test Tire 8 | 102 | 92 |
| Test Tire 9 | 98 | 97 |
| Test Tire 10 | 85 | 99 |
| Test Tire 11 | 78 | 100 |
| Test Tire 12 | 69 | 102 |
| Test Tire 13 | 108 | 97 |
| Test Tire 14 | 98 | 102 |
| Test Tire 15 | 91 | 103 |
| Test Tire 16 | 85 | 105 |
| Test Tire 17 | 55 | 98 |
| Test Tire 18 | 57 | 103 |
| Test Tire 19 | 51 | 103 |
| Test Tire 20 | 74 | 106 |
| Test Tire 21 | 63 | 107 |
| Test Tire 22 | 53 | 107 |
| Test Tire 23 | 93 | 93 |
| Test Tire 24 | 83 | 96 |
| Test Tire 25 | 70 | 98 |
| Test Tire 26 | 63 | 98 |
| Test Tire 27 | 59 | 99 |
| Test Tire 28 | 53 | 99 |
| Test Tire 29 | 60 | 94 |
| Test Tire 30 | 68 | 93 |
| Test Tire 31 | 71 | 93 |
| Test Tire 32 | 76 | 91 |
| Conventional Tire | 100 | 100 |

From the test results shown in Table 2 and Figure 4, it has been found that the radial tire having the ratio W/L of the tire cross-section width W to the tire outer diameter L of 0.25 or less can reduce both of the air resistance and the rolling resistance as compared to the conventional tire with the tire size of 175/65R15. The radial tire having the W/L ratio of 0.24 or less can further reduce the Cd and the RR, and especially the radial tire having the W/L ratio of 0.23 or less can reduce the Cd to less than 95 and the RR to less than 80.

Next, in order to confirm if the ration W/L of the tire cross-section W to the tire outer diameter L of 0.25 or less actually improve the fuel consumption and the interior comfort of the vehicle, the following tests are carried out onto the test tires described above.

<Actual Fuel Consumption>

A test driving under JOC8 mode is carried out. The evaluation results are indicated by indices with the evaluation result of the conventional tire being set to 100. The greater the index is, the better fuel consumption the tire has.

<Interior Comfort>

A width of a rear trunk is measured where the tire is installed on a vehicle with a 1.7 m width. The evaluation results are indicated by indices as the evaluation result of the conventional tire being set to 100. The greater the index is, the better interior comfort the tire has. Table 3 below shows the test results.

Table 3

|  | Actual Fuel Consumption | Interior Comfort |
|---|---|---|
| Test Tire 1 | 117 | 105 |
| Test Tire 2 | 119 | 104 |
| Test Tire 3 | 105 | 105 |
| Test Tire 4 | 107 | 105 |
| Test Tire 5 | 112 | 104 |
| Test Tire 6 | 114 | 104 |
| Test Tire 7 | 116 | 104 |
| Test Tire 8 | 100 | 104 |
| Test Tire 9 | 101 | 102 |
| Test Tire 10 | 106 | 101 |
| Test Tire 11 | 109 | 100 |
| Test Tire 12 | 112 | 99 |
| Test Tire 13 | 97 | 101 |
| Test Tire 14 | 101 | 99 |
| Test Tire 15 | 103 | 98 |
| Test Tire 16 | 106 | 97 |
| Test Tire 17 | 118 | 102 |
| Test Tire 18 | 117 | 98 |
| Test Tire 19 | 119 | 97 |
| Test Tire 20 | 110 | 96 |
| Test Tire 21 | 114 | 95 |
| Test Tire 22 | 118 | 95 |
| Test Tire 23 | 103 | 103 |
| Test Tire 24 | 107 | 102 |
| Test Tire 25 | 112 | 103 |
| Test Tire 26 | 115 | 102 |
| Test Tire 27 | 116 | 101 |
| Test Tire 28 | 119 | 101 |

(continued)

|  | Actual Fuel Consumption | Interior Comfort |
|---|---|---|
| Test Tire 29 | 116 | 105 |
| Test Tire 30 | 113 | 106 |
| Test Tire 31 | 112 | 105 |
| Test Tire 32 | 110 | 107 |
| Conventional Tire | 100 | 100 |

As shown in Table 1 and Table 3, it has been found that the test tires having the W/L ratio of 0.28 and 0.31 deteriorate at least one of the fuel consumption and the interior comfort as compared to the conventional tire, while the test tires 1 to 7, 23 to 32 having the W/L ratio W/L of 0.25 or less have better the fuel consumption and the interior comfort as compared to the conventional tire. In this way, the inventor has found that a pneumatic radial tire for a passenger vehicle having the W/L ratio of 0.25 or less can improve the interior comfort of the vehicle while reducing both of the air resistance of the vehicle and the rolling resistance of the tire to improve the fuel consumption.

For the tires having the W/L ratio of 0.25 or less, the inventor further conducts tests for evaluating other performances of the tires. The above-mentioned test tires 1 and 7 and the conventional tire which have the structure shown in Figure 3 are subjected to the tests to evaluate the uneven wear resistance, the cornering power and the maximum cornering force. The evaluations of each test are done as follows.

<Uneven Wear Resistance>

An internal pressure of 220kPa is applied to each of the above-mentioned tires. A drum test is performed under a condition that a load of 3.5 kN is applied to the tire, and the tire is driven at 80km/h for 30000km on the drum. The evaluation of the uneven wear resistance is performed by determining the difference of the wear between the tread center portion and the tread end portion after the above-mentioned drum running test. The evaluation results are indicated by indices as the uneven wear resistance of the conventional tire being set to 100. The smaller the index is, the better uneven wear resistance the tire has.

<Cornering Power>

The cornering power is measured on a flat belt type cornering testing machine with the internal pressure of 220 kPa, the load of 3.5 kN, and the driving speed of 100km/h. The cornering power is indicated by indices with the evaluation result of the conventional tire being set to 100. The greater the index is, the larger and thus more preferable the cornering power is.

<The Maximum Cornering Force>

The maximum cornering force is measured on a flat belt type cornering testing machine with the internal pressure of 220 kPa, the load of 3.5 kN, the driving speed of 100km/h, and the slip angle of 1 degree. The maximum cornering force is indicated by indices with the evaluation result of the conventional tire being set to 100. The greater the index is, the larger and thus more preferable the maximum cornering force is. The evaluation results are shown in Table 4 below.

Table 4

|  | Uneven Wear Resistance | Cornering Power | Maximum Cornering Force |
|---|---|---|---|
| Test Tire 1 | 108 | 98 | 83 |
| Test Tire 7 | 112 | 96 | 82 |
| Conventional Tire | 100 | 100 | 100 |

From the evaluation results shown in Table 4, it has been newly proven that the test tires 1 and 7 having the W/L ratio of 0.25 or less lower the uneven wear resistance, the cornering power and the maximum cornering force as compared to the conventional tires having the W/L ratio of 0.28. In particular, it is found that the maximum cornering force is significantly decreased as compared to the conventional tire.

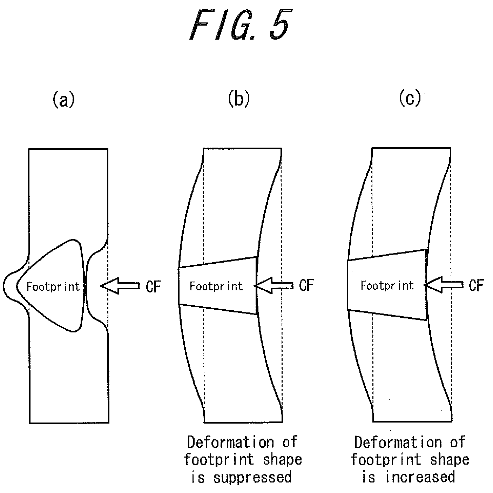

The inventor has diligently investigated the cause of the deterioration of the above-mentioned performances of the tire. As a result, it is found that the radial tires having the W/L ratio of 0.25 or less is subjected to a larger input force (pressure) from the road surface to locally distort the vicinity of the tread surface and thus greatly deform the footprint shape as schematically shown in Figure 5(a). Based on this finding, the inventor has newly conceived that the above-mentioned issues can be solved by suppressing the deformation of the footprint shape. Discussed below are the tests for evaluating the deformations of the footprint shape of the test tires 1 and 7 and the conventional tire.

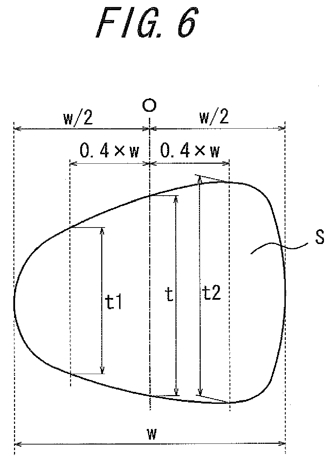

First, as shown in Figure 6, the deformation of the footprint shape is indicated by a deformation index I of the footprint shape defined as

$$I = t1 / t2 * 100$$

where t is the length of the widthwise central portion O of the footprint S at the slip angle of 4 degrees, w is the width of the footprint S, and t1 and t2 (t1 ≤ t2) are the lengths at the points spaced from the widthwise central portion O of the footprint by the distance w * 0.4 in widthwise opposite directions. The smaller the index is, the larger the deformation of the footprint shape is. The test tires 1 and 7 and the conventional tire, tests are subjected to tests for determining the above-mentioned deformation index of the footprint shape. The index is determined by measuring the deformation of the footprint shape to obtain the above-mentioned t1 and t2 where the tire is assembled onto a regulated rim, a regulated internal pressure and the load of 350kg are applied to the tire, and the tire is driven at the speed of 3km/h at the slip angle of 4 degrees. The evaluation results are shown in Table 5 below.

Table 5

|  | Deformation Index I of Footprint Shape |
| --- | --- |
| Test Tire 1 | 60 |
| Test Tire 7 | 55 |
| Conventional Tire | 80 |

As shown in Table 5, it has been found that the radial tires having the W/L ratio of 0.25 or less reduce the deformation index I of the footprint shape. Next, a tire structure will be discussed in which the uneven wear resistance, the cornering power and the maximum cornering force are improved by suppressing the deformation of the footprint shape of a radial tire having the W/L ratio of 0.25 or less.

The inventor has studies on the tire structure that can improve various performances of the above-mentioned tire, and has found that the local deformation of the tread surface can be suppressed by disposing a belt reinforcing layer between the belt and the tread of the tire with the intention to enhance the ring-rigidity of the tire whereby the deformation of the footprint shape can be suppressed. With reference to the drawings, the specific tire structure for realizing the improvement of the uneven wear resistance, the cornering power and the maximum cornering force is described in detail.

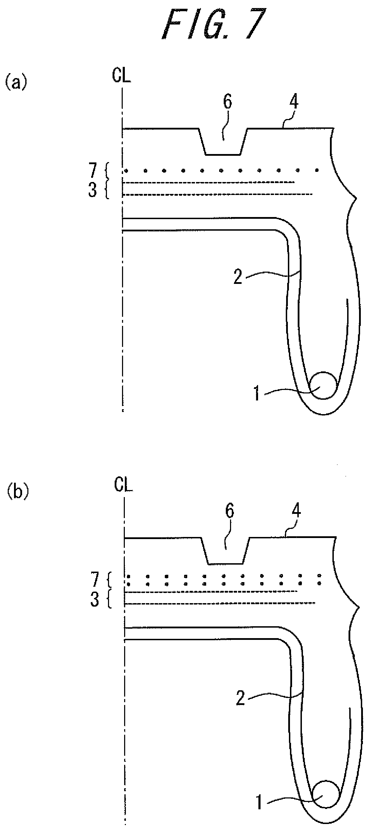

Figures 7(a) and 7(b) each illustrates a schematic cross-sectional view in the tire width direction of the radial tire according to an embodiment of the present invention. It should be noted that Figures 7(a) and 7(b) each shows only a half portion bounded by the tire equatorial line CL. The s shown in Figure 7(a) is different from the tire shown in Figure 3 in that the belt reinforcing layer 7 has high rigidity. In addition, the tire shown in Figure 7(b) has a plurality of (in the illustrated example, two) belt reinforcing layers 7 having high rigidity.

As shown in Figure 5 (a), a structure having a low rigidity belt reinforcing layer is locally deformed in tire circumferential direction by the input force from the road surface, and thus the footprint has a generally triangular shape, in other words, a shape in which the circumferential length changes significantly depending on the position in the width direction of the tire. To the contrary, the tire according to the present invention, which has a high rigid belt reinforcing layer, has enhanced ring-rigidity to suppress the deformation in the circumference direction of the tire, so that the deformation in the width direction of the tire is also suppressed due to the non-compressive nature of the rubber. Therefore, as shown in Figure 5(b), the footprint is deformed over a wide area in the circumferential direction by the input force from the road surface in the width direction of the tire, so that the footprint has a generally trapezoidal shaped, in other words, a shape in which the circumferential length does not change significantly depending on the position in the width direction of the tire.

The term "high rigidity" with regard to the belt reinforcing layer" as used herein means that when a parameter X is defined as X = Y * n * m where Y is the Young's modulus (GPa) of the cords used for the belt reinforcing layer measured according to the above-mentioned evaluation method, n is a placement density of the cords (pieces/50mm), and m is the number of the belt reinforcing layer(s), the parameter X of the tire of interest is higher the parameter X calculated from the Young's modulus and the placement density of the cords commonly used in the conventional tire having the W/L ratio of 0.25 or more, and the number of the belt reinforcing layer(s) of the conventional tire having the W/L ratio of 0.25 or more. Further, the term "enhancing ring-rigidity" as used herein means that the rigidity of the tires in the circumferential direction is enhanced by arranging the belt reinforcing layer with high rigidity. It should be noted that the parameter X defined by the Young's modulus and the placement density of the cord commonly used in the conventional tire having the W/L ratio of 0.25 or more, and the number of the belt reinforcing layer(s) of the conventional tire having the W/L ratio of 0.25 or more ranges about 150 to about 300. In addition, the placement density of the cords helically wound in the circumferential direction of the tire means the placement density of the cords as viewed in the cross-sectional view in the width direction of the tire.

More specifically, the belt reinforcing layer with high rigidity preferably has the parameter X of 750 or more according to the evaluation method and definition above, and more preferably 1000 or more. The reason is that, if the parameter X is less than 750, the effect of improving the ring-rigidity of the tire may not be obtained sufficiently, and that, if the parameter X is 1000 or more, the input force from the tread is transmitted to immediately below the ends of the tire to deform the annular belt in entirety, which enables to minimize the local deformation near the tread surface. Further, the parameter X is preferably 1500 or less. The reason is that, if parameter X is more than 1500, the rigidity in the circumferential direction of the tire becomes too high to cause the later-mentioned problem of the deterioration of the cornering force.

It should be noted that, in order to keep the parameter X within the above-mentioned range, the cords used in the belt reinforcing layer preferably has the Young's modulus of 15 GPa to 30 GPa, the placement density of 40 to 60 (pieces/50mm), and one or two belt reinforcing layer(s). In addition, the cord is preferably made of organic fibers such as Kevlar having fineness of 1500 to 1800dtex.

A plurality of tires having the structure shown in Figure 7(a) are experimentally manufactured, and are subjected to tests for evaluating various performances. The specifications of each tire are shown in Table 6, and the evaluation results are shown in Table 7. It should be noted that, in Table 6, the cords used in the belt reinforcing layer are helically wound in the circumferential direction of the tire, and the placement density of the cords is 50 (pieces/50mm).

Table 6

|  | Tire Size | W/L Ratio | Tire Structure | Parameter X |
|---|---|---|---|---|
| Test Tier 33 | 155/55R21 | 0.22 | Figure 7(a) | 350 |
| Test Tier 34 | 155/55R21 | 0.22 | Figure 7(a) | 500 |
| Test Tier 35 | 155/55R21 | 0.22 | Figure 7(a) | 700 |
| Test Tier 36 | 155/55R21 | 0.22 | Figure 7(a) | 800 |
| Test Tier 37 | 155/55R21 | 0.22 | Figure 7(a) | 950 |
| Test Tier 38 | 155/55R21 | 0.22 | Figure 7(a) | 1050 |
| Test Tier 39 | 155/55R21 | 0.22 | Figure 7(a) | 1125 |
| Test Tier 40 | 155/55R21 | 0.22 | Figure 7(a) | 1500 |
| Test Tier 41 | 165/70R18 | 0.24 | Figure 7(a) | 350 |
| Test Tier 42 | 165/70R18 | 0.24 | Figure 7(a) | 500 |
| Test Tier 43 | 165/70R18 | 0.24 | Figure 7(a) | 700 |
| Test Tier 44 | 165/70R18 | 0.24 | Figure 7(a) | 800 |
| Test Tier 45 | 165/70R18 | 0.24 | Figure 7(a) | 950 |
| Test Tier 46 | 165/70R18 | 0.24 | Figure 7(a) | 1050 |
| Test Tier 47 | 165/70R18 | 0.24 | Figure 7(a) | 1125 |
| Test Tier 48 | 165/70R18 | 0.24 | Figure 7(a) | 1500 |
| Test Tier 49 | 165/55R19 | 0.25 | Figure 7(a) | 350 |
| Test Tier 50 | 165/55R19 | 0.25 | Figure 7(a) | 500 |
| Test Tier 51 | 165/55R19 | 0.25 | Figure 7(a) | 700 |

(continued)

|  | Tire Size | W/L Ratio | Tire Structure | Parameter X |
|---|---|---|---|---|
| Test Tier 52 | 165/55R19 | 0.25 | Figure 7(a) | 800 |
| Test Tier 53 | 165/55R19 | 0.25 | Figure 7(a) | 950 |
| Test Tier 54 | 165/55R19 | 0.25 | Figure 7(a) | 1050 |
| Test Tier 55 | 165/55R19 | 0.25 | Figure 7(a) | 1125 |
| Test Tier 56 | 165/55R19 | 0.25 | Figure 7(a) | 1500 |
| Test Tier 57 | 145/60R18 | 0.23 | Figure 7(a) | 350 |
| Test Tier 58 | 145/60R18 | 0.23 | Figure 7(a) | 500 |
| Test Tier 59 | 145/60R18 | 0.23 | Figure 7(a) | 700 |
| Test Tier 60 | 145/60R18 | 0.23 | Figure 7(a) | 800 |
| Test Tier 61 | 145/60R18 | 0.23 | Figure 7(a) | 950 |
| Test Tier 62 | 145/60R18 | 0.23 | Figure 7(a) | 1050 |
| Test Tier 63 | 145/60R18 | 0.23 | Figure 7(a) | 1125 |
| Test Tier 64 | 145/60R18 | 0.23 | Figure 7(a) | 1500 |

Table 7

|  | Uneven Wear Resistance | Cornering Power | Maximum Cornering Force | Deformation Index I of Footprint Shape |
|---|---|---|---|---|
| Test Tier 33 | 108 | 98 | 83 | 60 |
| Test Tier 34 | 105 | 96 | 86 | 64 |
| Test Tier 35 | 103 | 94 | 88 | 69 |
| Test Tier 36 | 98 | 90 | 92 | 73 |
| Test Tier 37 | 98 | 88 | 95 | 77 |
| Test Tier 38 | 95 | 93 | 99 | 79 |
| Test Tier 39 | 94 | 89 | 98 | 81 |
| Test Tier 40 | 92 | 87 | 96 | 79 |
| Test Tier 41 | 112 | 96 | 82 | 55 |
| Test Tier 42 | 108 | 94 | 85 | 60 |
| Test Tier 43 | 104 | 91 | 87 | 64 |
| Test Tier 44 | 99 | 88 | 91 | 69 |

(continued)

| | Uneven Wear Resistance | Cornering Power | Maximum Cornering Force | Deformation Index I of Footprint Shape |
|---|---|---|---|---|
| Test Tier 45 | 98 | 84 | 95 | 76 |
| Test Tier 46 | 93 | 86 | 96 | 80 |
| Test Tier 47 | 92 | 85 | 97 | 82 |
| Test Tier 48 | 91 | 84 | 97 | 81 |
| Test Tier 49 | 110 | 99 | 84 | 64 |
| Test Tier 50 | 108 | 97 | 86 | 67 |
| Test Tier 51 | 105 | 95 | 88 | 70 |
| Test Tier 52 | 99 | 93 | 92 | 73 |
| Test Tier 53 | 98 | 90 | 96 | 76 |
| Test Tier 54 | 96 | 88 | 98 | 79 |
| Test Tier 55 | 93 | 87 | 98 | 83 |
| Test Tier 56 | 91 | 85 | 99 | 82 |
| Test Tier 57 | 105 | 93 | 79 | 63 |
| Test Tier 58 | 103 | 91 | 82 | 68 |
| Test Tier 59 | 101 | 89 | 85 | 72 |
| Test Tier 60 | 96 | 87 | 89 | 77 |
| Test Tier 61 | 95 | 86 | 93 | 79 |
| Test Tier 62 | 92 | 84 | 96 | 82 |
| Test Tier 63 | 89 | 82 | 98 | 84 |
| Test Tier 64 | 88 | 81 | 99 | 85 |

From Table 7, it has been found that the tire having the structure shown in Figure 7(a) and a reinforcing layer having high rigidity with the parameter X of 750 or more has small deformation of the footprint shape and excellent uneven wear resistance. Table 7 also shows that the tire with the parameter X of 1000 or more has especially excellent uneven wear resistance.

However, it is newly found that, although the deformation of the footprint shape is decreased as compared to the tire having the W/L ratio of 0.25 or more, the cornering power and the maximum cornering force are deteriorated slightly, which must be improved. The inventor has studied on the deformation of the footprint shape, and has found that the tire having the structure shown in Figures 7(a) and 7(b) has a smaller contact-length tc of the widthwise central portion of the footprint during straight running, and that the cornering force, which is substantially proportional to the square of the contact length, is decreased to deteriorate the cornering power. Table 8 below shows the evaluation results that are obtained by determining the above-mentioned contact length tc with a device for measuring the footprint during a straight running for each test tire. The evaluation results are indicated by indices with the evaluation result of the conventional tire being set to 100. The larger the index is, the better the performance is.

Table 8

|  | Ground contact length Index |
| --- | --- |
| Test Tire 1 | 109 |
| Test Tire 7 | 113 |
| Test Tire 23 | 93 |
| Test Tire 31 | 95 |
| Test Tire 55 | 89 |
| Test Tire 63 | 91 |
| Conventional Tire | 100 |

The inventor has found that the reason why the tires having the structure shown in Figures 7(a) and 7(b) have shorter contact length is that the rigidity in the circumferential direction of the tire becomes too high due to the reinforcing layer with high rigidity and the belt layer formed by the belt cords declining with a small angle in the circumferential direction of the tire, so that the circumferential stretch of the tire rubber constituting the tread surface is excessively limited.

Therefore, the inventor has created a new idea that the above-mentioned can be solved by enlarging the inclination angle of the belt cord constituting the belt layer with respect to the circumferential direction of the tire to decrease the out-of-plane bending rigidity (the rigidity against bending with the width direction of the tire being as the folding line). In other words, the rigidity in the circumferential direction of the tire which serves to suppress the deformation of the footprint shape is mainly borne by the belt reinforcing layer, so that the deformation of the footprint shape can be suppressed while the decrease of the contact length tc can be suppressed, which lead to suppressing the deterioration of the uneven wear resistance, the cornering force, and the cornering power.

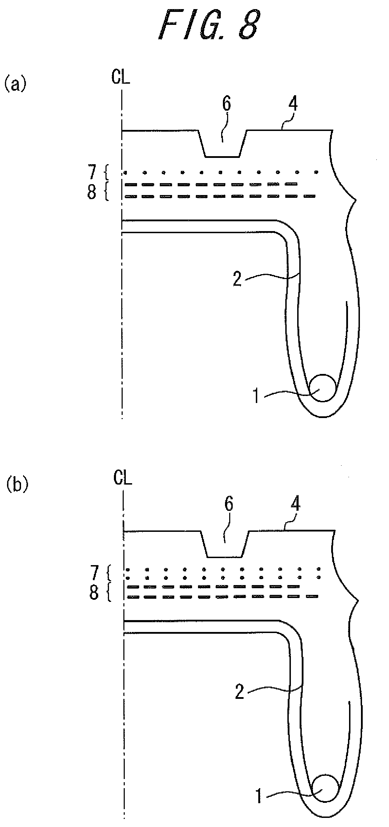

Hereinafter, the structure of the tire is discussed. Figures 8(a) and 8(b) illustrate schematic cross-sectional views in the width direction of radial tires of embodiments of the present invention. It should be noted that Figures 8(a) and 8(b) show only a half portion bounded by the tire equatorial line CL. The tires shown in Figures 8(a) and 8(b) are different from the tires shown in Figures 7(a) and 7(b) in that the belt layer 8 is inclined at a large angle with respect to the circumferential direction of the tire. As discussed above, this allows the belt reinforcing layer with high rigidity to enhance the ring-rigidity to suppress the deformation of the footprint shape, and allows the belt layer having the large angle of inclination with respect to the circumferential direction of the tire to decrease the out-of-plane bending rigidity in the circumferential direction of the tire to increase the stretch of the rubber in the circumferential direction of the tire during the deformation of the footprint shape, thereby suppressing the decrease of the contact length.

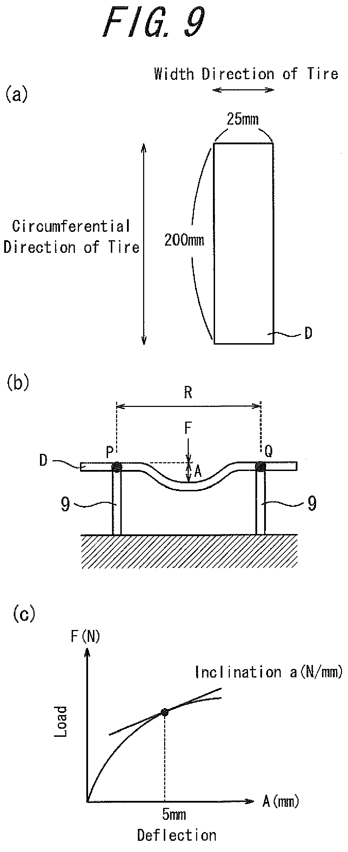

The "large angle" as used herein specifically means that the angle of inclination is 50 degrees to 70 degrees with respect to the circumferential direction of the tire. When the angle is less than 50 degrees, the effect of decreasing out-of-plane bending rigidity in the circumferential direction is insufficient, and thus the contact length is decreased. On the other hand, when the angle is larger than 70 degrees, the shearing-rigidity in the width direction of the tire deteriorates. A plurality of tires having the structure shown in Figure 9(a) are experimentally manufactured and are subjected to tests for evaluating various performances of the tire. The specifications of each tire are shown in Table 9, and the evaluation results are shown in Table 10. It should be noted that, in Table 9, the "inclination angle" is an angle of inclination of the belt layer with respect to the circumferential direction of the tire. It should be also noted that the cords used in the belt reinforcing layer are helically wound in the circumferential direction of the tire, and the placement density of the cords is 50 (pieces/ 50mm).

Table 9

|  | Tire Size | W/L Ratio | Inclination Angle (degrees) | Parameter X |
|---|---|---|---|---|
| Test Tire 65 | 155/55R21 | 0.22 | 45 | 1125 |
| Test Tire 66 | 155/55R21 | 0.22 | 55 | 1125 |
| Test Tire 67 | 155/55R21 | 0.22 | 60 | 1125 |
| Test Tire 68 | 155/55R21 | 0.22 | 65 | 1125 |
| Test Tire 69 | 155/55R21 | 0.22 | 75 | 1125 |
| Test Tire 70 | 165/70R18 | 0.24 | 45 | 1125 |
| Test Tire 71 | 165/70R18 | 0.24 | 55 | 1125 |
| Test Tire 72 | 165/70R18 | 0.24 | 60 | 1125 |
| Test Tire 73 | 165/70R18 | 0.24 | 65 | 1125 |
| Test Tire 74 | 165/70R18 | 0.24 | 75 | 1125 |
| Test Tire 75 | 165/55R19 | 0.25 | 45 | 1125 |
| Test Tire 76 | 165/55R19 | 0.25 | 55 | 1125 |
| Test Tire 77 | 165/55R19 | 0.25 | 60 | 1125 |
| Test Tire 78 | 165/55R19 | 0.25 | 65 | 1125 |
| Test Tire 79 | 165/55RR9 | 0.25 | 75 | 1125 |
| Test Tire 80 | 145/60RR18 | 0.23 | 45 | 1125 |
| Test Tire 81 | 145/60R18 | 0.23 | 55 | 1125 |
| Test Tire 82 | 145/60R18 | 0.23 | 60 | 1125 |
| Test Tire 83 | 145/60R18 | 0.23 | 65 | 1125 |
| Test Tire 84 | 145/60R18 | 0.23 | 75 | 1125 |

Table 10

|  | Deformation Index I of Footprint Shape | Contact Length Ic | Uneven Wear Resistance | Maximum Cornering Force | Cornering Power |
|---|---|---|---|---|---|
| Test Tire 65 | 76 | 98 | 97 | 95 | 97 |
| Test Tire 66 | 77 | 105 | 95 | 107 | 104 |
| Test Tire 67 | 78 | 107 | 95 | 107 | 104 |
| Test Tire 68 | 79 | 108 | 95 | 105 | 105 |
| Test Tire 69 | 80 | 109 | 96 | 104 | 106 |
| Test Tire 70 | 78 | 97 | 98 | 93 | 94 |
| Test Tire 71 | 80 | 108 | 98 | 112 | 101 |
| Test Tire 72 | 82 | 110 | 97 | 110 | 101 |

(continued)

| | Deformation Index I of Footprint Shape | Contact Length lc | Uneven Wear Resistance | Maximum Cornering Force | Cornering Power |
|---|---|---|---|---|---|
| Test Tire 73 | 83 | 111 | 95 | 108 | 103 |
| Test Tire 74 | 84 | 112 | 99 | 107 | 104 |
| Test Tire 75 | 78 | 95 | 98 | 94 | 98 |
| Test Tire 76 | 80 | 101 | 97 | 109 | 103 |
| Test Tire 77 | 81 | 104 | 96 | 108 | 104 |
| Test Tire 78 | 83 | 106 | 96 | 106 | 106 |
| Test Tire 79 | 84 | 107 | 98 | 104 | 106 |
| Test Tire 80 | 80 | 96 | 99 | 93 | 96 |
| Test Tire 81 | 83 | 101 | 97 | 110 | 102 |
| Test Tire 82 | 83 | 103 | 96 | 108 | 104 |
| Test Tire 83 | 84 | 104 | 95 | 108 | 107 |
| Test Tire 84 | 85 | 104 | 98 | 105 | 107 |

Table 10shows that the test tires 66 to 69, 71 to 74, 76 to 79, 81 to 84 in which the circumferential angle of the belt is optimized suppress both of the deformation of the footprint shape and the decrease of the contact length, and improve all of the uneven wear resistance, the maximum cornering force, and the cornering power.

Further, in Figures 7(a), 7(b), 8(a) and 8(b), the belt having higher out-of-plane bending rigidity with respect to the belt surface (out-of-plane bending rigidity in the width direction) is preferred in order to suppress the deformation of the footprint shape. The out-of-plane bending rigidity is defined as follows. That is, as shown in Figure 9(a), the belt is cut into a rectangular sample D sized 200 mm in the circumferential direction and 25 mm in the width direction of the tire. Then, as shown in Figure 9 (b), the sample D is supported by supporting members 9.Thereafter, the center of the sample D is pressed from the direction perpendicular to the rectangular surface by a pressing plate (not shown in the figure). In this state, the distance of the sample D between the supporting points P and Q of the supporting members 9 is 160 (mm), the pressing force is F (N), and the amount of deflection of the sample is A (mm). As shown in Figure 9(c), the out-of-plane bending rigidity (N/mm) is define as the inclination a (N/m) of the tangent at the point where the deflection is 5 (mm) in an experimentally obtained load-deflection diagram (diagram F-A).

Here, the out-of-plane bending rigidity of the belt is preferably 6 N/mm or more. The members used for the belt requires the strength capable of bearing the internal pressure and the projection input force, so that a member having a large tensile strength defined in JIS Z 2241 (1998) is preferred. In particular, the tensile strength defined in JIS Z 2241 is preferably 1255kPa or more.

According to the present invention, a pneumatic radial tire for a passenger vehicle with excellent low fuel consumption, interior comfort, and uneven wear resistance can be manufactured and provided to the market.

(Explanation of the codes)

1 Bead Core
2 Carcass
3,8 Belt
4 Tread
5,7 Belt Reinforcing Layer
6 Circumferential Main Groove
9 Supporting Member
P Point on the Plane
Q Point on the Plane
R Distance between Two Points (mm)
A Pressing Force (mm)
D Sample
W Tire Section Width
L Tire Outer-Diameter
S Footprint
O Central Portion of the Footprint in the Width Direction
t, t1, t2 Contact Length
w Contact Width
Y Young's modulus
n Placement Density of the Cords
m Number of the Belt Reinforcing Layer (s)
X Parameter Indicating the Rigidity of the Reinforcing Layer

## Claims

1. A pneumatic radial tire for a passenger vehicle comprising a pair of bead portions, a carcass formed by a ply of radially arranged cords extending toroidally between the pair of bead portions, a belt (3, 8) formed by one or more belt plies disposed outside of the carcass in a radial direction,
   and a tread (4) disposed outside of the belt in a radial direction,
   wherein a ratio W/L is 0.25 or less wherein W is a section width and L is an outer diameter of the tire, and
   a belt reinforcing layer (5, 7) having a high rigidity is disposed between the belt and the tread.

2. The pneumatic radial tire for a passenger vehicle according to claim 1, wherein the ratio W/L is 0.24 or less.

3. The pneumatic radial tire for a passenger vehicle according to claim 1 or 2, wherein the belt reinforcing layer comprises a rubberized cord layer containing cords extending in the circumferential direction of the tire and satisfies the following relationships:

$$X = Y * n * m,$$

$$X \geq 750$$

   where Y is a Young's modulus (GPa) of the cords, n is a placement density of the cords (pieces/50mm), and m is the number of the belt reinforcing layer(s).

4. The pneumatic radial tire for a passenger vehicle according to any one of claims 1-3, wherein an air capacity of the tire is 15,000 $cm^3$ or more.

5. The pneumatic radial tire for a passenger vehicle according to any one of claims 1-4, wherein the belt layer comprises a plurality of inclined-belt layers formed by belt cords inclined at an angle of 50 degrees to 70 degrees with respect to the circumferential direction of the tire, the belt cords intersecting with each other between the inclined-belt layers.

**EP 2 583 837 B1**

**Patentansprüche**

1. Radialluftreifen für einen Personenkraftwagen, umfassend ein Paar Wulstteile, eine Karkasse, welche aus einer Lage von radial angeordneten Korden besteht, welche sich torusförmig zwischen dem Paar von Wulstteilen erstrecken, einen Gürtel (3, 8), welcher aus einem oder mehreren Gürtellagen besteht, welcher in einer radialen Richtung außerhalb der Karkasse angeordnet ist,
und eine Lauffläche (4), welche außerhalb des Gürtels, in einer radialen Richtung, angeordnet ist,
wobei das Verhältnis W/L gleich 0,25 oder kleiner ist, wobei W eine Querschnittsbreite und L ein Reifenaußendurchmesser ist, und
wobei eine Gürtelverstärkungslage (5, 7), welche eine hohe Steifheit aufweist, zwischen dem Gürtel und der Lauffläche angeordnet ist.

2. Radialluftreifen für einen Personenkraftwagen nach Anspruch 1, wobei das Verhältnis W/L gleich 0,24 oder kleiner ist.

3. Radialluftreifen für einen Personenkraftwagen nach Anspruch 1 oder 2, wobei die Gürtelverstärkungslage eine gummierte Kordlage umfasst, welche sich in der Reifenumfangsrichtung erstreckende Korden enthält, und folgende Beziehungen erfüllt:

$$X = Y*n*m,$$

$$X \geq 750$$

wobei Y ein Elastizitätsmodul (GPa) der Korden, n eine Anordnungsdichte der Korden (Elemente/50 mm), und m die Anzahl von Gürtelverstärkungslage(n) ist.

4. Radialluftreifen für einen Personenkraftwagen nach einem der Ansprüche 1-3, wobei eine Luftkapazität des Reifens gleich oder größer als 15.000 cm$^3$ ist.

5. Radialluftreifen für einen Personenkraftwagen nach einem der Ansprüche 1-4, wobei die Gürtellage eine Mehrzahl von geneigten Gürtellagen umfasst, welche aus Gürtelkorden bestehen, welche einen Neigungswinkel zwischen 50 und 70 Grad, in Bezug auf die Reifenumfangsrichtung, aufweisen, wobei die Gürtelkorde sich zwischen den geneigten Gürtellagen miteinander kreuzen.

**Revendications**

1. Bandage pneumatique radial pour un véhicule particulier, comprenant une paire de parties de talon, une carcasse formée par une nappe de câblés à agencement radial, s'étendant toroïdalement entre la paire de parties de talon, une ceinture (3, 8) formée par une ou plusieurs nappes de ceinture, agencée à l'extérieur de la carcasse dans une direction radiale ;
et une bande de roulement (4), agencée à l'extérieur de la ceinture dans une direction radiale ;
dans lequel un rapport W/L correspond à 0,25 ou moins, W représentant une largeur de section et L représentant un diamètre extérieur du bandage pneumatique ; et
une couche de renforcement de la ceinture (5, 7), ayant une rigidité élevée est agencée entre la ceinture et la bande de roulement.

2. Bandage pneumatique radial pour un véhicule particulier selon la revendication 1, dans lequel le rapport W/L correspond à 0,24 ou moins.

3. Bandage pneumatique radial pour un véhicule particulier selon les revendications 1 ou 2, dans lequel la couche de renforcement de la ceinture comprend une couche de câblés caoutchoutés contenant des câblés s'étendant dans la direction circonférentielle du bandage pneumatique, et satisfaisant les relations ci-dessous :

$$X = Y* n * m,$$

$$X \geq 750$$

où Y représente un module de Young (GPa) des câblés, n représentant une densité de positionnement des câblés (pièces/50 mm) et m représentant le nombre de couche(s) de renforcement de la ceinture.

4. Bandage pneumatique radial pour un véhicule particulier selon l'une quelconque des revendications 1 à 3, dans lequel une capacité d'air du bandage pneumatique correspond à 15.000 cm$^3$ ou plus.

5. Bandage pneumatique radial pour un véhicule particulier selon l'une quelconque des revendications 1 à 4, dans lequel la couche de ceinture comprend plusieurs couches de ceinture inclinées formées par des câblés de ceinture inclinés à un angle compris entre 50 degrés et 70 degrés par rapport à la direction circonférentielle du bandage pneumatique, les câblés de la ceinture se coupant les uns les autres entre les couches de ceinture inclinées.

# FIG. 1

# FIG. 2

(a)                    (b)

## FIG. 3

# FIG. 4

FIG. 5

(a)　　　　　(b)　　　　　(c)

Deformation of footprint shape is suppressed

Deformation of footprint shape is increased

## FIG. 6

## FIG. 7

(a)

(b)

# FIG. 8

(a)

(b)

# FIG. 9

(a)

Width Direction of Tire

Circumferential
Direction of Tire

25mm

200mm

D

(b)

R

F

P

A

Q

D

9

9

(c)

F(N)

Inclination a(N/mm)

Load

A(mm)

5mm

Deflection

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07040706 A
- JP 7040706 A
- JP S63106102 B
- JP 2007168711 A